# EUROPÄISCHE PATENTSCHRIFT

(11) **EP 2 933 140 B1**
(45) Veröffentlichungstag und Bekanntmachung des Hinweises auf die Patenterteilung: **19.12.2018**
(21) Anmeldenummer: 15162697.5
(22) Anmeldetag: 08.04.2015
(51) Int. Cl.: B60P 7/08

(54) **SICHERUNGSSCHIENE ZUM EINBAU IN FAHRZEUGE**
SECURING RAIL FOR MOUNTING IN VEHICLES
RAILS DE SÉCURITÉ À INSTALLER DANS DES VÉHICULES

(30) Priorität: 16.04.2014 DE 102014105440
(43) Veröffentlichungstag der Anmeldung: 21.10.2015
(73) Patentinhaber: TS Gesellschaft für Transport- und Sicherungssysteme mbH, 58285 Gevelsberg (DE)
(72) Erfinder: Dönnebrink, Andreas, 59348 Lüdinghausen (DE); Agarius, Klaus, 58285 Gevelsberg (DE)
(74) Vertreter: Buse, Mentzel, Ludewig Patentanwaltskanzlei

(56) Entgegenhaltungen:
- DE-A1- 4 318 838
- DE-A1- 4 341 230
- DE-A1-102005 061 493
- DE-A1-102009 018 487
- DE-U- 6 941 229

## Beschreibung

Die Erfindung betrifft eine Sicherungsschiene der im Oberbegriff des Anspruchs 1 angegeben Art. Derartige Schienen finden vielfach im Bereich der Ladungssicherung Verwendung. Sie werden zumeist an Fußböden, Decken oder Seitenwänden von Transportern, LKWs, Anhängern oder anderen Fahrzeugen angeordnet. In die Ausnehmungen solcher Schienen können dann unter Zwischenschaltung der Hinterschnitte Fittings eingebracht werden, an denen wiederum Sicherungsnetze, Zurrgurte und andere Ladungssicherungsmittel befestigt werden können. Eine gattungsgemäße Schiene wird in der DE 69 41 229 U offenbart. Bekannte Sicherungsschienen bestehen zumeist aus Aluminium-Strangpressprofilen, welche in den Laderäumen festgeschraubt werden. Das Festschrauben erfolgt üblicherweise durch Bohrungen im Boden der Sicherungsschiene. Nachteilig daran ist jedoch, dass je nach Durchführung der Befestigung sich die Schiene verbiegen kann, insbesondere, wenn eine erste Schraube durch ein erstes Loch sehr fest angezogen wird, wenn das Material am Boden oft nicht so massiv ausgeführt ist. Daher muss das Material am Boden einer solchen Sicherungsschiene häufig mit einer relativ dicken Wandstärke ausgeführt sein. Des Weiteren ist die Herstellung derartiger Sicherungsschienen oft sehr teuer, da die Aluminium-Strangpressprofile noch einer spanenden Bearbeitung unterzogen werden müssen, um die Ausnehmungen herzustellen, bevor sie zum Einbau in einem Fahrzeug bereit sind. Diese spanende Bearbeitung macht einen Großteil der Kosten für die Herstellung von Sicherungsschienen aus.

Aufgabe der Erfindung ist es daher, diese Nachteile zu vermeiden und eine Sicherungsschiene zu schaffen, die kostengünstiger in der Herstellung und sicher in der Befestigung ist. Diese Aufgabe wird durch die kennzeichnenden Merkmale von Anspruch 1 gelöst, denen folgende besondere Bedeutung zukommt.

Die Befestigung der erfindungsgemäßen Sicherungsschiene erfolgt über deren Massivbereiche. Als Befestigungsmittel können Klebstoffe oder auch Schrauben, Bolzen und Ähnliches vorgesehen sein. Auch als Befestigungsmittel im Sinne der Erfindung sind Schweißverbindungen, die zwischen den Massivbereichen und der darunter befindlichen Fläche erfolgen, anzusehen. Wichtig dabei ist jedoch, dass, im eingebauten Zustand, jegliche Befestigungsmittel nicht über die Oberseite oder die Längsseiten der Schiene herausragen, was die weitere Verwendung der Sicherungsschiene stören könnte. Wenn die Befestigung der Sicherungsschiene über die Massivbereiche erfolgt, ist ein Verbiegen der Sicherungsschiene bei sachgemäßer oder unsachgemäßer Befestigung kaum mehr möglich, da die Massivbereiche mehr Material aufweisen als der Boden und somit eine höhere Biegesteifigkeit besitzen.

In einem bevorzugten Ausführungsbeispiel sind in den Massivbereichen der Sicherungsschiene ein oder mehrere Löcher für die Aufnahme von Befestigungsmitteln vorgesehen. Als Befestigungsmittel dienen hier insbesondere Schrauben, aber auch Bolzen oder Ähnliches können Verwendung finden. Im Weiteren wird sich auf diese Art von Befestigungsmitteln bezogen, wobei andere Befestigungsmittel und -möglichkeiten ausdrücklich mit vom Erfindungsgedanken umfasst sind.

Die Löcher sind in dieser Ausführungsform derart ausgebildet, dass die entsprechenden Befestigungsmittel nicht über die Oberseite der Sicherungsschiene herausstehen. Dadurch, dass die Befestigungsmittel bzw. deren Köpfe nicht über die Oberseite der Sicherungsschiene herausstehen, sind herkömmliche Fittings problemlos in die Ausnehmungen der Sicherungsschiene aufnehmbar.

Eine erste Möglichkeit dafür zu sorgen, dass die Köpfe der Befestigungsmittel nicht über die Oberseite der Sicherungsschiene herausstehen, liegt darin, die Löcher als abgesenkte Löcher auszubilden. Als Befestigungsmittel können dann beispielsweise Senkkopfschrauben Verwendung finden. Im in das abgesenkte Loch eingebrachten Zustand steht dann der Kopf der Senkkopfschraube nicht über die Oberseite der Sicherungsschiene heraus, sondern schließt mit dieser ab.

Eine weitere bevorzugte Ausführungsform sieht jedoch vor, dass die Massivbereiche gegenüber der Oberseite der Sicherungsschiene im Profilquerschnitt eine reduzierte Höhe aufweisen. Hierdurch kann einerseits Material eingespart werden, was insbesondere im Hinblick auf steigende Rohstoffpreise sehr interessant ist. Andererseits können die Löcher auch als einfache Durchgangslöcher ausgebildet sein, da der Kopf einer normalen Schraube, beispielsweise einer Zylinderkopfschraube dann mit seiner Oberseite nicht über die Oberseite der Sicherungsschiene heraussteht, sondern vielmehr in dem Bereich mit reduzierter Höhe angeordnet ist. Durch diese Ausführungsform können einerseits Materialkosten, andererseits aber auch Bearbeitungskosten gespart werden, da das Ausbilden abgesenkter Löcher immer noch einen zusätzlichen Arbeitsschritt benötigt im Vergleich zu einem normalen Durchgangsloch und somit teurer ist.

Erfindungsgemäß ist die Sicherungsschiene als paralleles Profilpaar ausgebildet. Hierbei bilden beide Einzelprofile des Profilpaares gemeinschaftlich zwischen sich die Ausnehmungen. Bei dieser Ausführungsform kann dann auf den Boden und das entsprechende Material vollständig verzichtet werden. Bevorzugterweise sind beide Profile des Profilpaares auch identisch zueinander ausgebildet. Sie werden lediglich um 180° verdreht zueinander angeordnet, um die Sicherungsschiene zu bilden. Dies spart ebenfalls Kosten in der Herstellung und in der Lagerhaltung.

Der besondere Vorteil der Verwendung eines Profilpaares besteht zusätzlich darin, dass die Einzelprofile des Profilpaares durch Stanzen bearbeitet werden können, um die Ausnehmungen zu bilden. Dies ist deutlich preisgünstiger als eine spanende Bearbeitung, beispielsweise durch Bohren der Fräsen, wie sie bei herkömmlichen Sicherungsschienen der Fall ist. Die so hergestellten Sicherungsschienen sind somit besonders preiswert, da weniger Material verbraucht wird und auf eine spanende Bearbeitung verzichtet werden kann. Bei der Ausbildung der Sicherungsschiene als paralleles Profilpaar kann weiterhin eine Montagehilfe vorgesehen sein, die dafür sorgt, dass die beiden Einzelprofile des Profilpaars bei der Montage in einem genau parallelen Abstand zueinander angeordnet werden.

Weiterhin kann eine Kunststoffunterlage vorgesehen sein, welche zwischen der Sicherungsschiene und dem darunter befindlichen Boden angeordnet werden kann, um den Boden zu schützen.

Die erfindungsgemäßen Sicherungsschienen können vorteilhafterweise aus einem Strangpressprofil bestehen. Derartige Profile sind in nahezu jeder Form herstellbar. Als Materialien für die Sicherungsschiene können Aluminium, Stahl oder sonstige Metalle Verwendung finden, aber auch Kunststoffe und Verbundmaterialien sind geeignet. Die genaue Materialauswahl hängt vom jeweiligen Anwendungsfall ab.

Weitere Vorteile und Ausführungsformen der Erfindung ergeben sich aus der nachfolgenden Beschreibung, den Unteransprüchen sowie den Zeichnungen. In den Zeichnungen sind drei Ausführungsbeispielen dargestellt. Es zeigen:
- Fig. 1:: eine Sicherungsschiene in einem ersten Ausführungsbeispiel, perspektivisch,
- Fig. 2:: einen Ausschnitt aus Fig. 1 entlang des Ausschnitts II, vergrößert
- Fig. 3:: die Sicherungsschiene aus Fig. 1 und 2 im Querschnitt,
- Fig. 4:: die Sicherungsschiene gemäß Fig. 1 bis 3, an einem Boden montiert,
- Fig. 5:: eine Sicherungsschiene in einem zweiten Ausführungsbeispiel, perspektivisch,
- Fig. 6:: einen Ausschnitt aus Fig. 5 entlang des Ausschnitts VI, vergrößert,
- Fig. 7: die Sicherungsschiene aus Fig. 5 und 6 im Querschnitt,
- Fig. 8:: die Sicherungsschiene gemäß Fig. 5 bis 7, an einem Boden montiert,
- Fig. 9:: eine erfindungsgemäße Sicherungsschiene in einem dritten Ausführungsbeispiel,
- Fig. 10:: einen Ausschnitt aus Fig. 9 entlang des Ausschnitts X, vergrößert,
- Fig. 11:: die Sicherungsschiene aus Fig. 9 und 10 im Querschnitt,
- Fig. 12:: die Sicherungsschiene gemäß Fig. 9 bis 11 an einem Boden montiert.

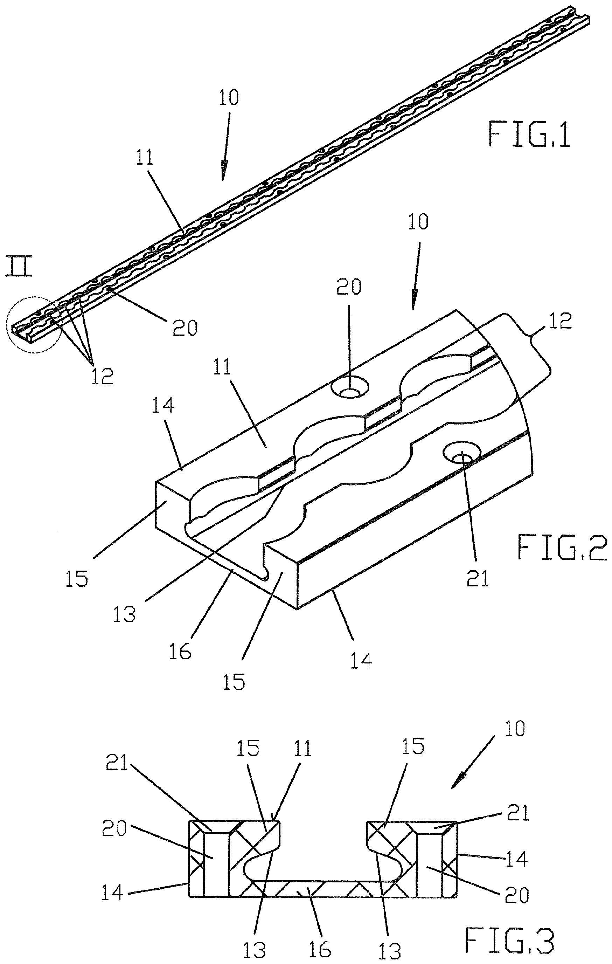

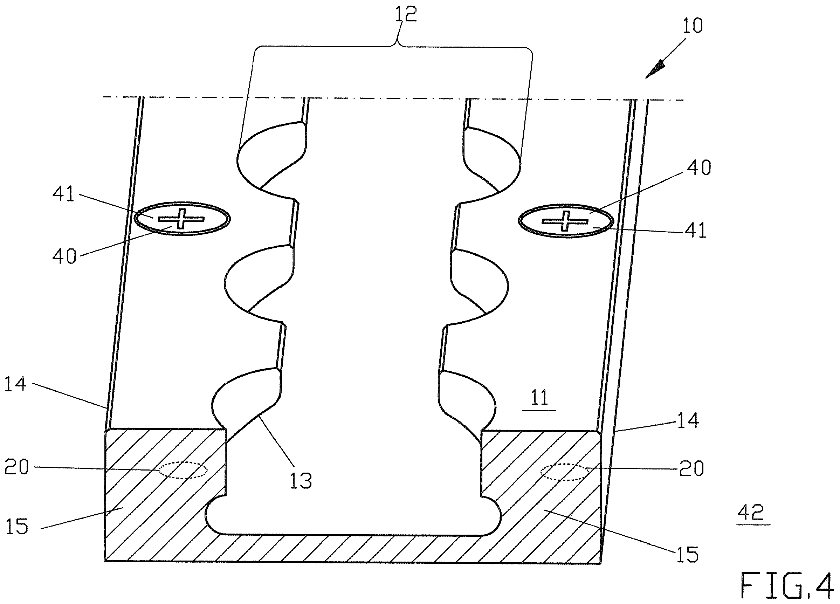

Die Fig. 1 bis 4 zeigen eine Sicherungsschiene 10 in einem ersten Ausführungsbeispiel. Die Sicherungsschiene 10 verfügt an ihren Längsseiten 14 über je einen Massivbereich 15. In diesen Massivbereich 15 sind Löcher 20 eingebracht, durch welche Befestigungsmittel 40 führbar sind, um die Sicherungsschiene 10 auf einer Fläche 42 zu befestigen. Diese Löcher 20 sind hier als abgesenkte Löcher 21 ausgebildet. In diese können beispielsweise Senkkopfschrauben als Befestigungsmittel 40 aufgenommen werden, wie in Fig. 4 gezeigt.

Man erkennt weiterhin, dass der Boden 16 der Sicherungsschiene 10 dünnwandig ausgebildet ist. Hierdurch spart man im Vergleich zu herkömmlichen Sicherungsschienen 10 an Material. Das Material ist bei den Sicherungsschienen 10 nicht notwendig, da die Befestigung nicht durch Befestigungsmittel 40, die durch den Boden 16 geführt werden, sondern durch Befestigungsmittel 40, die durch die Massivbereiche 15 geführt werden, vorgenommen wird. Die in die abgesenkten Löcher 21 eingefügten Befestigungsmittel 40 in Form von Senkkopfschrauben stehen nicht über die Oberseite 11 der Sicherungsschiene 10 heraus, sondern sind mit ihrem Kopf 41 in das abgesenkte Loch 21 eingebracht und fluchten somit mit der Oberseite 11 der Sicherungsschiene 10, wie insbesondere aus Fig. 4 hervorgeht. Die Fläche 42 ist hier nur angedeutet dargestellt.

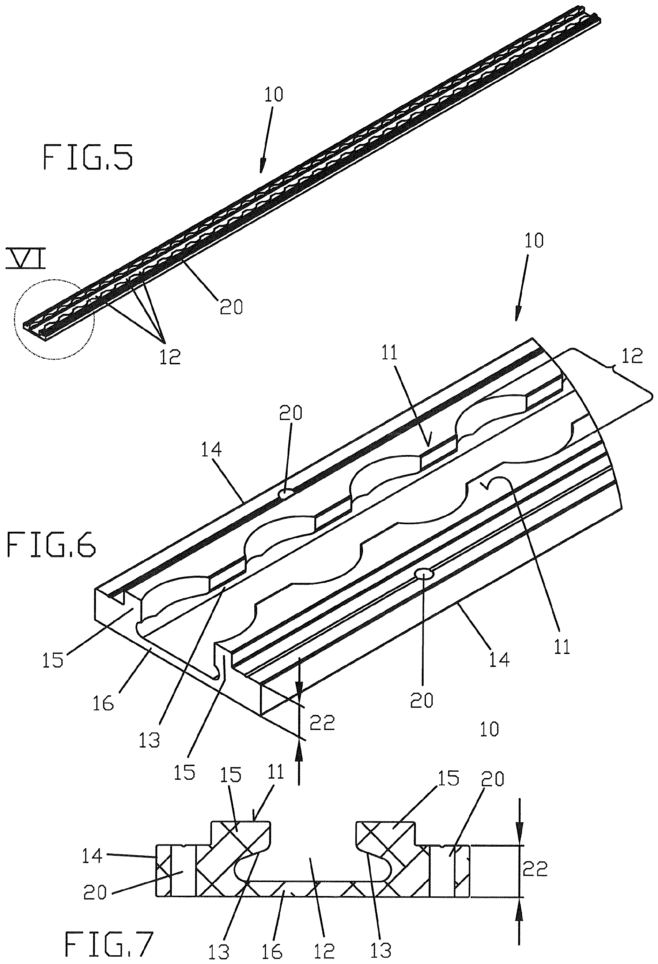

Ein weiteres vorteilhaftes Ausführungsbeispiel zeigen die Fig. 5 bis 8. Hier ist der Massivbereich 15 der Sicherungsschiene 10 mit einer reduzierten Höhe 22 ausgebildet. Hierdurch wird weiteres Material für die Sicherungsschiene 10 gespart. Auch hier ist wieder der Boden 16 der Sicherungsschiene 10 dünnwandig ausgebildet. Durch die zusätzliche Materialersparnis, können die Kosten für die Sicherungsschiene 10 weiter gesenkt werden.

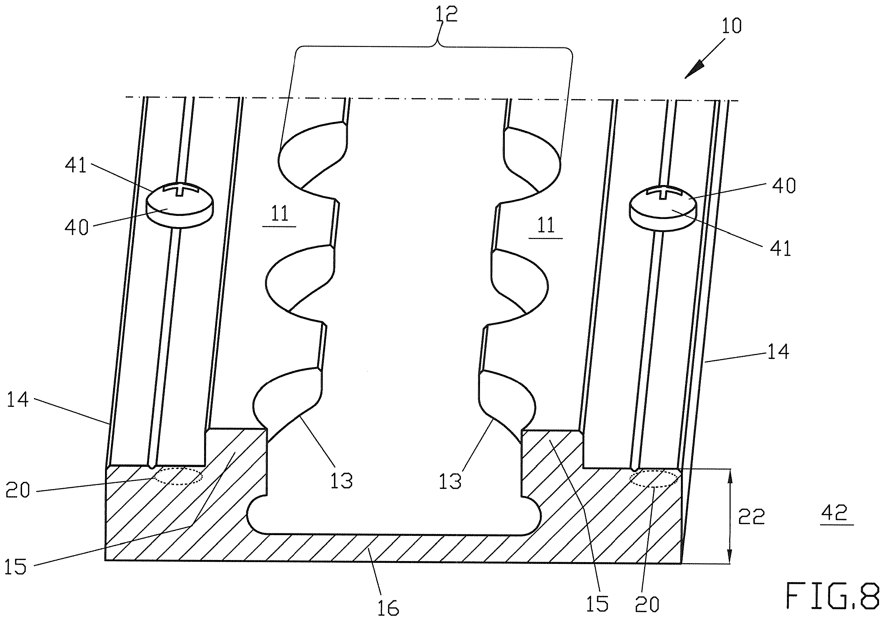

Bei der Herstellung der Schiene wurden ebenfalls Kosten eingespart, da die Löcher 20 als einfache Durchgangslöcher gestaltet wurden, deren Herstellung preiswerter ist als die Herstellung von abgesenkten Löchern 21. Die Schrauben, die als Befestigungsmittel 40 in Fig. 8 dienen, um die Sicherungsschiene 10 an der angedeuteten Fläche 42 zu befestigen, sind einfache Zylinderkopfschrauben. Die Köpfe 41 der Befestigungsmittel 40 stehen zwar von der Oberfläche des Massivbereichs 15 hervor, jedoch nicht von der Oberseite 11 der Sicherungsschiene 10, da die Massivbereiche 15 die bereits erwähnte reduzierte Höhe 22 besitzen.

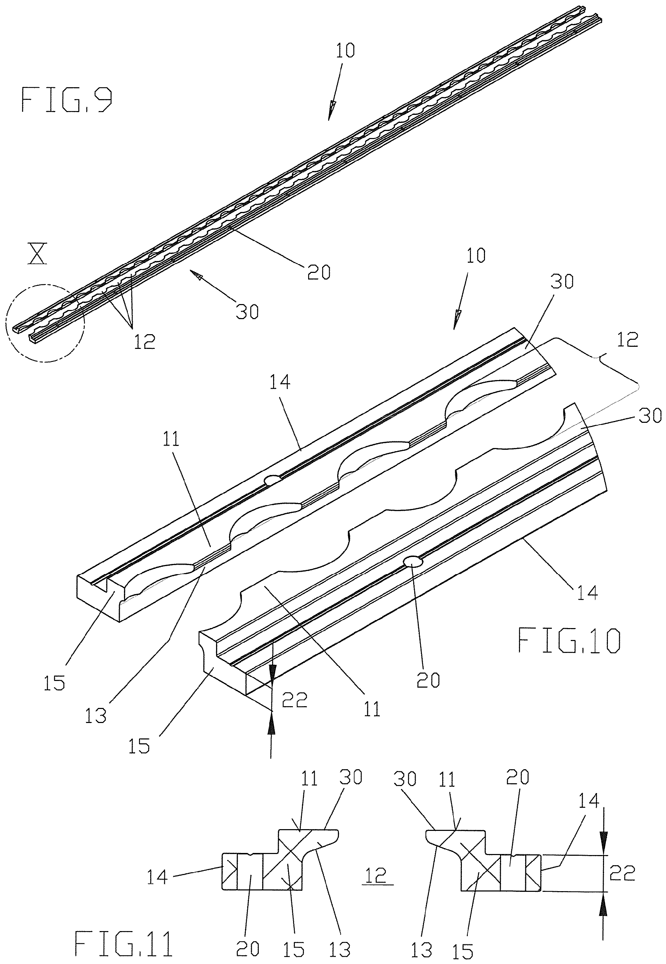

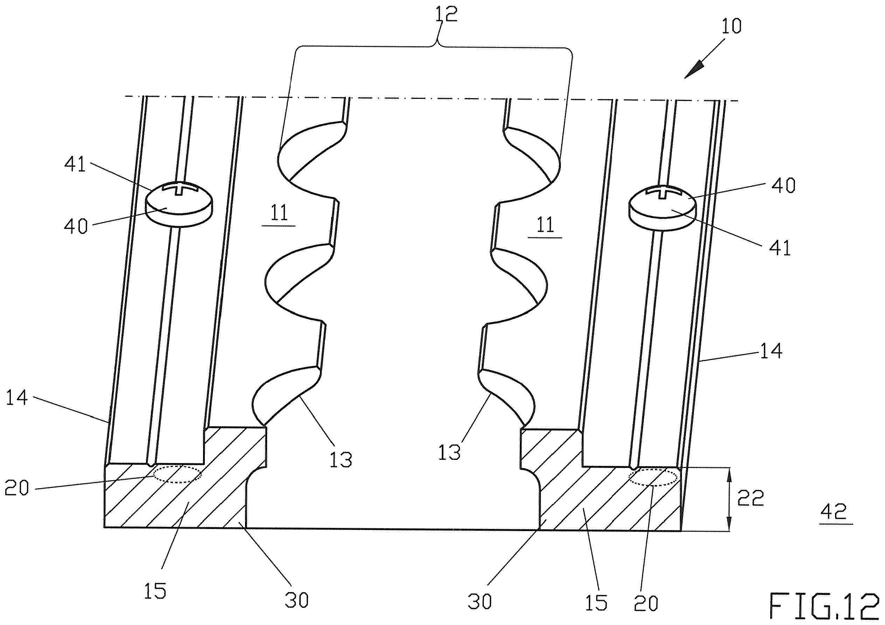

Die preisgünstigste hier dargestellte Ausführungsform der erfindungsgemäßen Sicherungsschiene 10 ist in den Fig. 9 bis 12 gezeigt. Die Sicherungsschiene 10 ist als paralleles Profilpaar 30 ausgebildet. Die Massivbereiche 15 der Sicherungsschiene 10 sind ebenfalls wieder mit reduzierter Höhe 22 ausgebildet und die Löcher 20 als einfache Durchgangslöcher konzipiert. Ein Boden 16 ist bei dieser Sicherungsschiene 10 nicht vorgesehen. Hierdurch wird noch mehr Material für die Herstellung der Sicherungsschiene 10 eingespart. Eine zusätzliche sehr deutliche Einsparung ergibt sich dadurch, dass Bearbeitung der Einzelprofile des Profilpaares 30 nicht durch eine spanende Bearbeitung erfolgt. Eine spanende Bearbeitung, beispielsweise zur Herstellung der Ausnehmungen 12 oder von abgesenkten Löchern 21, kann hier entfallen. Das Einzelprofil des Profilpaares 30 wird durch Strangpressen hergestellt, wobei die Löcher 20 sowie die Bereiche der Ausnehmungen 12 durch Stanzen hergestellt werden können. Dies ist deutlich preisgünstiger als Bohren oder Fräsen oder andere spanende Bearbeitungsmethoden, die bei der Herstellung herkömmlicher Sicherungsschienen 10 erfolgen müssen. Beide Einzelprofile des Profilpaares 30 sind zueinander identisch und werden nur um 180° gedreht angeordnet. Die Ausnehmungen 12 entstehen dann zwischen den Einzelprofilen des Profilpaares 30. Als Befestigungsmittel 40 können hier wieder einfache Zylinderkopfschrauben Verwendung finden, wie bereits im zweiten Ausführungsbeispiel beschrieben.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abwandlungen und Abänderungen möglich.

### Bezugszeichenliste:

- 10: Sicherungsschiene
- 11: Oberseite von 10
- 12: Ausnehmung
- 13: Hinterschnitt
- 14: Längsseite von 10
- 15: Massivbereich
- 16: Boden von 10
- 20: Loch
- 21: abgesenktes Loch
- 22: reduzierte Höhe
- 30: Profilpaar
- 40: Befestigungsmittel
- 41: Kopf von 40
- 42: Fläche

## Patentansprüche

1. Sicherungsschiene (10) zum Einbau in Fahrzeuge,
wobei die Sicherungsschiene (10) als wenigstens ein Profil ausgebildet ist und in ihrer Oberseite (11) eine Vielzahl von in Verlaufsrichtung der Sicherungsschiene (10) nebeneinander angeordneten zueinander identisch ausgebildeten Ausnehmungen (12) aufweist, die jeweils mehrere Hinterschnitte (13) besitzen
und die Sicherungsschiene (10) an jeder ihrer beiden Längsseiten (14) einen Massivbereich (15) aufweist,
wobei die Sicherungsschiene (10) nur über ihre Massivbereiche (15) an einer darunter befindlichen Fläche (42) befestigbar ist,
wobei Befestigungsmittel (40) wie Schrauben, Bolzen o.ä. vorgesehen sind, um die Sicherungsschiene (10) zu befestigen
und wobei die Sicherungsschiene (10) so ausgestaltet ist, dass die Befestigungsmittel (40) nicht über die Oberseite (11) der Sicherungsschiene (10) oder über ihre Längsseiten (14) herausragen
**dadurch gekennzeichnet,**
**dass** die Sicherungsschiene (10) als paralleles Profilpaar (30) ausgebildet ist, welches zwischen sich die Ausnehmungen (12) bildet und welches keinen Boden (16) aufweist.

2. Sicherungsschiene (10) nach Anspruch 1, **dadurch gekennzeichnet, dass** beide Profile des Profilpaares (30) identisch zueinander sind.

3. Sicherungsschiene (10) nach einem der Ansprüche 1 oder 2, **dadurch gekennzeichnet, dass** eine Montagehilfe vorgesehen ist, die dabei hilft, beide Profile des Profilpaars (30) während der Montage in einem parallelen Abstand zueinander anzuordnen.

4. Sicherungsschiene (10) nach einem der Ansprüche 1 bis 3, **dadurch gekennzeichnet, dass** in den Massivbereichen (15) ein oder mehrere Löcher (20) für die Aufnahme der Befestigungsmittel (40) vorgesehen sind,
dass die Löcher (20) derart ausgestaltet sind, dass die Befestigungsmittel (40) so in diese einbringbar sind, dass die Köpfe (41) der Befestigungsmittel (40) nicht über die Oberseite (11) der Sicherungsschiene (10) herausstehen.

5. Sicherungsschiene (10) nach einem der Ansprüche 1 bis 4, **dadurch gekennzeichnet, dass** die Löcher (20) als abgesenkte Löcher (21) ausgebildet sind.

6. Sicherungsschiene (10) nach einem der Ansprüche 1 bis 5, **dadurch gekennzeichnet, dass** die Massivbereiche (15) gegenüber der Oberseite (11) der Sicherungsschiene (10) im Profilquerschnitt mit reduzierter Höhe (22) ausgebildet sind.

7. Sicherungsschiene (10) nach Anspruch 6, **dadurch gekennzeichnet, dass** die Löcher (20) als Durchgangslöcher ausgebildet sind.

8. Sicherungsschiene (10) nach einem der Ansprüche 1 bis 7, **dadurch gekennzeichnet, dass** eine Kunststoffunterlage vorgesehen ist, welche unterhalb der Sicherungsschiene (10) angeordnet werden kann, um die darunter befindliche Fläche (42) zu schützen.

9. Sicherungsschiene (10) nach einem der Ansprüche 1 bis 8, **dadurch gekennzeichnet, dass** die Sicherungsschiene (10) aus einem Strangpressprofil besteht.

10. Sicherungsschiene (10) nach einem der Ansprüche 1 bis 9, **dadurch gekennzeichnet, dass** die Sicherungsschiene (10) aus Aluminium, Stahl, einem sonstigen Metall oder aus Kunststoff oder einem Verbundmaterial besteht.

## Claims

1. Safety rail (10) for installation in vehicles,
whereby, the safety rail (10) is formed as a minimum of one profile and features numerous, adjacent, identically formed recesses (12) in its upper surface (11) in the direction of the safety rail (10), which each have multiple undercuts (13)
and the safety rail (10) features a solid area (15) on each of its two longitudinal sides (14),
whereby, the safety rail (10) can only be attached to one of the surfaces below (42) by its solid area (15),
whereby, attachment items (40) such as screws, bolts or similar, are provided in order to attach the safety rail (10)
and whereby, the safety rail (10) is designed so that the attachment items (40) do not protrude over the upper surface (11) of the safety rail (10) or their longitudinal sides (14)
**characterized in that,**
the safety rail (10) is formed as a parallel, profile pair (30) which, between them, forms the recesses (12) and which features no floor (16).

2. Safety rail (10) in accordance with claim 1, **characterized in that**, both profiles of the profile pair (30) are identical to one another.

3. Safety rail (10) in accordance with one of the claims 1 or 2, **characterized in that**, an assembly aid is provided, which thereby assists both profiles of the profile pair (30) to arrange a parallel clearance to one another during assembly.

4. Safety rail (10) in accordance with one of the claims 1 to 3, **characterized in that**, one or more holes (20) are provided in the solid area (15) for the insertion of the attachment items (40),
that the holes (20) are designed so that the attachment items (40) are inserted into these so that the heads (41) of the attachment items (40) do not protrude over the upper surface (11) of the safety rail (10).

5. Safety rail (10) in accordance with one of the claims 1 to 4, **characterized in that**, the holes (20) are formed as sunken holes (21).

6. Safety rail (10) in accordance with one of the claims 1 to 5, **characterized in that**, the solid areas (15) opposite the upper surface (11) of the safety rail (10) are formed in the profile cross-section with a reduced height (22).

7. Safety rail (10) in accordance with claim 6, **characterized in that**, the holes (20) are formed as clearance holes.

8. Safety rail (10) in accordance with one of the claims 1 to 7, **characterized in that**, a plastic support is provided, which can be arranged below the safety rail (10) in order to protect the area (42) below it.

9. Safety rail (10) in accordance with one of the claims 1 to 8, **characterized in that**, the safety rail (10) comprises of an extruded section.

10. Safety rail (10) in accordance with one of the claims 1 to 9, **characterized in that**, the safety rail (10) comprises made from aluminium, steel, another metal, or from plastic or a composite material.

## Revendications

1. Rail de sécurité (10) à installer sur des véhicules,
sachant que le rail de sécurité (10) est configuré au moins sous la forme d'un profilé et qu'il présente dans son côté supérieur (11) un grand nombre d'évidements (12) disposés côte-à-côte dans le sens du tracé du rail de sécurité (10) et configurés identiques les uns aux autres, évidements qui présentent chacun plusieurs contre-dépouilles (13)
et que le rail de sécurité (10) présente sur chacun de ses deux côtés longitudinaux (14) une zone massive (15),
sachant que le rail de sécurité (10) ne peut être fixé que par ses zones pleines (15) contre une surface (42) située en dessous,
sachant que des moyens de fixation (40) tels que des vis, boulons ou similaires sont prévus pour fixer le rail de sécurité (10)
et sachant que le rail de sécurité (10) est configuré de telle manière que les moyens de fixation (40) ne font pas saillie au-dessus du côté supérieur (11) du rail de sécurité (10) ou au-delà de ses côtés longitudinaux (14),
**caractérisé en ce que**
le rail de sécurité (10) est configuré sous forme de paire de profilés (30) parallèles formant entre eux les évidements (12) et qui ne présentent pas de fond (16).

2. Rail de sécurité (10) selon la revendication 1, **caractérisé en ce que** les deux profilés de la paire de profilés (30) sont identiques l'un à l'autre.

3. Rail de sécurité (10) selon l'une des revendications 1 ou 2, **caractérisé en ce qu'**un moyen d'aide au montage est prévu pour aider pendant le montage à disposer, écartés d'une certaine distance parallèlement l'un à l'autre, les deux profilés formant la paire de profilés (30).

4. Rail de sécurité (10) selon l'une des revendications 1 à 3, **caractérisé en ce que** sont prévus dans les zones pleines (15) un ou plusieurs trous (20) pour recevoir les moyens de fixation (40),
**en ce que** les trous (20) sont configurés de telle sorte que les moyens de fixation (40) puissent être introduits dedans de manière que les têtes (41) des moyens de fixation (40) ne fassent pas saillie au-dessus du côté supérieur (11) du rail de sécurité (10).

5. Rail de sécurité (10) selon l'une des revendications 1 à 4, **caractérisé en ce que** les trous (20) sont configurés en trous chambrés (21).

6. Rail de sécurité (10) selon l'une des revendications 1 à 5, **caractérisé en ce que** les zones pleines (15) sont, comparées dans la section du profilé avec le côté supérieur (11) du rail de sécurité (10), configurées d'une hauteur réduite (22).

7. Rail de sécurité (10) selon la revendication 6, **caractérisé en ce que** les trous (20) sont configurés sous forme de trous traversants.

8. Rail de sécurité (10) selon l'une des revendications 1 à 7, **caractérisé en ce qu'**est prévue une garniture en plastique pouvant être disposée sous le rail de sécurité (10) pour protéger la surface (42) qui se trouve en dessous.

9. Rail de sécurité (10) selon l'une des revendications 1 à 8, **caractérisé en ce que** le rail de sécurité (10) se compose d'un profilé extrudé.

10. Rail de sécurité (10) selon l'une des revendications 1 à 9, **caractérisé en ce que** le rail de sécurité (10) est en aluminium, acier, en un métal quelconque ou en matière plastique ou en matériau composite.
